## Europäisches Patentamt

(19) **European Patent Office**

**Office européen des brevets**

(11) Numéro de publication: **0 102 260**
**B1**

(12) **FASCICULE DE BREVET EUROPEEN**

(45) Date de publication du fascicule du brevet:
**27.08.86**

(21) Numéro de dépôt: **83401360.9**

(22) Date de dépôt: **01.07.83**

(51) Int. Cl.⁴: **F 02 P 5/04**

(54) Procédé et dispositif d'obtention d'un retard à l'allumage d'un moteur à combustion interne pendant la phase de démarrage.

(30) Priorité: **05.08.82 FR 8213666**

(43) Date de publication de la demande:
**07.03.84 Bulletin 84/10**

(45) Mention de la délivrance du brevet:
**27.08.86 Bulletin 86/35**

(84) Etats contractants désignés:
**DE GB IT**

(56) Documents cités:
**US - A - 3 573 545**
**US - A - 3 910 243**

(73) Titulaire: **DUCELLIER & Cie, Echat 950, F-94024 Créteil Cedex (FR)**

(72) Inventeur: **Vermillet, Bernard, 4 Allée de la Butte aux Cailles, F-93160 Noisy le Grand (FR)**
Inventeur: **Rosemont, Aurélien, 20 Cité Moynet, F-75012 Paris (FR)**

(74) Mandataire: **Habert, Roger, VALEO Service Propriété Industrielle 21 rue Auguste Blanqui, F-93406 Saint-Ouen (FR)**

ACTORUM AG

## Description

L'invention concerne un procédé et un dispositif d'obtention d'un retard à l'allumage, pendant la phase de démarrage d'un moteur à combustion interne, notamment pour véhicules automobiles, procédé et dispositif dans lesquels on détermine l'écart angulaire entre la valeur maximale positive V1 et la valeur nulle Vo des signaux issus de l'enroulement induit, d'un générateur de signaux alternatifs, lequel écart angulaire multiplié par un coefficient *k* prédéterminé procure un angle α constant correspondant au retard à l'allumage désiré.

La nécessité d'économie de carburant et également d'antipollution fait qu'il apparaît souhaitable de faire fonctionner les moteurs à combustion interne avec des mélanges les plus pauvres possible, mais à ce fonctionnement s'associe des avances à l'allumage plus importantes, que celles nécessaires avec des mélanges riches, en raison du fait que le délai de propagation de la flamme est plus long avec un mélange pauvre qu'avec un mélange riche.

Dans les installations d'allumage, du type de l'invention, qui utilisent un générateur de signaux alternatifs de déclenchement de l'allumage, ce générateur est logé dans le boîtier du distributeur d'allumage.

Le décalage angulaire du point d'allumage est obtenu par un dispositif mécanique d'avance à l'allumage utilisant la force centrifuge, ce genre de mécanisme qui est bien connu de l'homme de l'art, ne sera pas en conséquence décrit dans la présente invention. Ce dispositif mécanique qui produit soit une avance nulle, soit une très légère avance pendant la phase de fonctionnement au ralenti du moteur, à combustion interne, procure en conséquence, la même avance pendant la phase de démarrage, le dispositif mécanique d'avance à l'allumage étant totalement inopérant pendant cette phase.

Pour faciliter le démarrage du moteur, particulièrement aux basses températures, il est souhaitable de retarder l'instant de déclenchement de l'allumage, de façon que la force des explosions dans les cylindres ne vienne s'opposer à la force d'entraînement, en rotation du moteur, produite par le démarreur électrique dont sont munis les véhicules automobiles.

On connaît, notamment par le document FR-A- 1 455 180 un système d'allumage, utilisant un générateur de signaux alternatifs de déclenchement de l'instant d'allumage, dans lequel la repolarisation à lieu pendant la phase de démarrage de manière à retarder le déclenchement des étincelles d'allumage.

Le retard à l'allumage est obtenu, pendant la phase de démarrage, lorsqu'il y a coïncidence d'une tension de valeur fixe, avec la partie négative de la tension délivrée par le générateur de signaux alternatifs.

La demanderesse a constaté que l'écart angulaire, entre le point de tension nulle V0, et la valeur maximale V1 des signaux alternatifs délivrés, par de tels générateurs, est égal au dixième de la période T des signaux alternatifs, le point de tension nulle V0 correspondant au point de déclenchement des étincelles d'allumage pendant la phase de fonctionnement auralenti du moteur.

En conséquence, pour une application à l'allumage d'un moteur à quatre cylindres, l'écart angulaire correspond à 9 degrés, de part et d'autre du point de tension nulle V0, cette valeur correspond à 18 degrés de rotation du vilebrequin, le distributeur d'allumage dans lequel est logé le générateur de signaux étant entraîné à la moitié de la vitesse du moteur.

On conçoit bien que le dispositif décrit dans le document FR-A- 1 455 180 ne peut procurer qu'un retard égal au maximum à 18 degrés moteur, en réglant la valeur de coïncidence des deux tensions sur la valeur maximale de l'alternance négative, lequel retard peut être insuffisant sur certains moteurs en cours de développement. La présente invention a pour but de remédier à cet inconvénient et concerne à cet effet un procédé et un dispositif d'obtention d'un retard à l'allumage d'un moteur à combustion interne, pendant la phase de démarrage, caractérisé en ce que l'on détermine l'écart angulaire entre la valeur maximale positive V1 et la valeur nulle V0 des signaux issus d'un générateur de signaux alternatifs, lequel écart angulaire multiplié par un coefficient *k* prédéterminé procure un angle α constant correspondant au retard à l'allumage désiré.

Le dispositif pour la mise en œuvre du procédé selon l'invention comprend: un générateur de signaux alternatifs; un circuit pour retarder l'allumage d'un moteur à combustion pendant la phase de démarrage, circuit comportant une première entrée reliée au générateur de signaux alternatifs, une deuxième entrée connectée à une position «allumage» d'une clé de contact, une troisième entrée reliée à une position «démarrage» de ladite clé et une sortie connectée à l'entrée d'un circuit de commande d'un interrupteur semiconducteur connectée en série avec l'enroulement primaire d'une bobine élévatrice de tension dont l'enroulement secondaire est relié consécutivement aux bougies d'allumage par un distributeur.

Le circuit pour retarder l'allumage comprend des premiers moyens de mise en forme de la partie positive des signaux alternatifs issus de l'enroulement induit du générateur entre un seuil s1 et leur valeur nulle V0; des moyens dérivateurs qui génèrent des signaux indicateurs de la valeur maximale positive V1 des signaux alternatifs issus de l'enroulement induit, du générateur, les signaux générés par les premiers moyens de mise en forme et par les moyens dérivateurs étant appliqués à l'entrée de deuxièmes moyens de mise en forme dont la sortie délivre des signaux, de durée correspondante à l'écart angulaire entre la valeur maximale V1 et la valeur nulle V0 des signaux issus de l'enroulement induit du générateur, à un transistor relié à des moyens d'intégration qui, commandés par le transistor, assurent la charge et la décharge d'un condensateur, la sortie des moyens d'intégration étant reliée à l'entrée de moyens de comparaison qui délivrent à leur sortie des signaux de durée équivalente aux durées de charge et de décharge du condensateur, lesquels signaux ajoutés aux signaux issus du générateur retardent d'un angle α constant, l'allumage du moteur à combustion interne.

L'avantage obtenu par cette invention consiste dans le fait que l'angle maximum du retard désiré n'est pas tributaire de la valeur maximale négative de la tension délivrée par le générateur de signaux, pendant la phase de démarrage du moteur à combustion interne.

La description qui va suivre en regard des dessins annexés fera mieux comprendre comment l'invention peut être réalisée.

La figure 1 est la représentation schématique du dispositif pour la mise en œuvre du procédé selon l'invention.

La figure 2 représente un mode préféré de réalisation du circuit pour retarder l'allumage du moteur à cumbustion interne.

La figure 3 représente l'allure des signaux en divers points du circuit représenté par la figure 2.

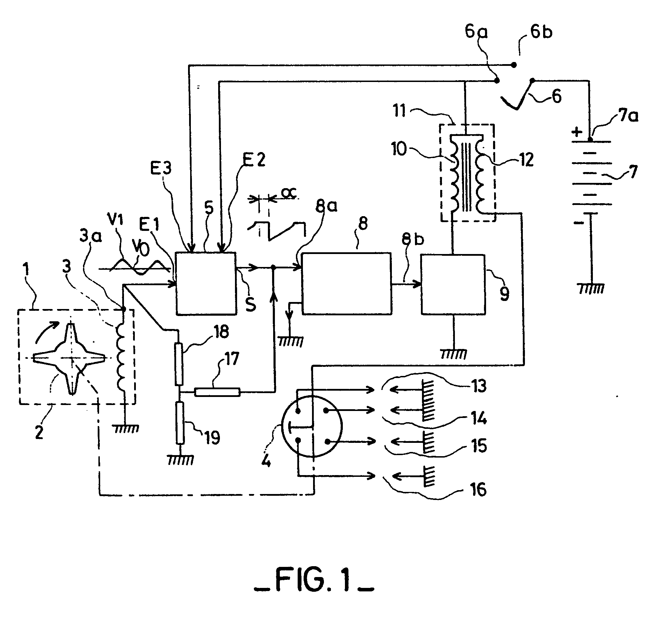

Le dispositif représenté schématiquement par la figure 1, comporte un générateur 1 de signaux alternatifs de déclenchement des étincelles d'allumage, du genre tel celui décrit dans le document FR-A- 1 455 180, mais adapté à l'allumage d'un moteur à quatre cylindres.

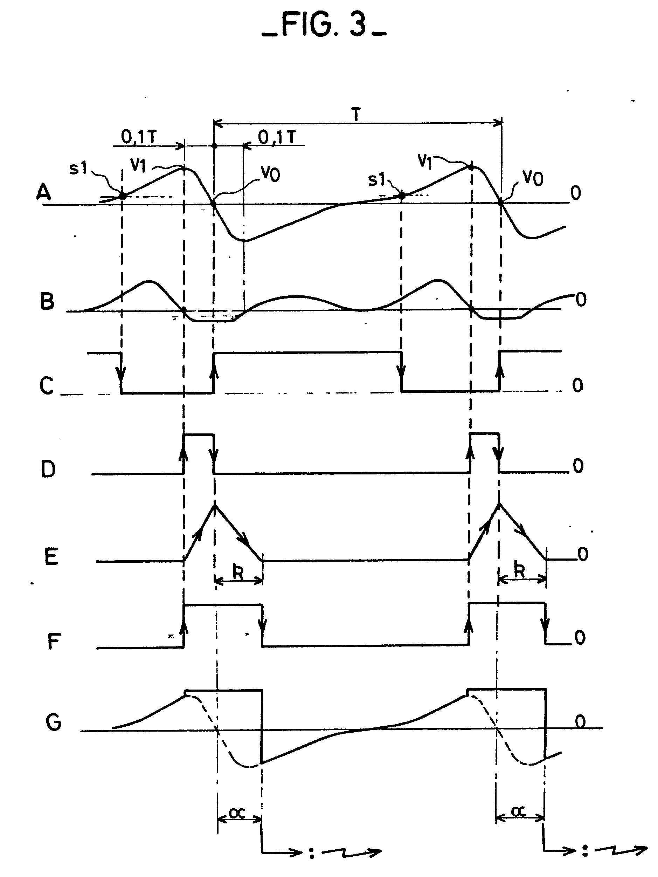

Ce générateur 1, logé dans le boîtier d'un distributeur d'allumage 4 comporte, outre le dispositif d'avance centrifuge non représenté, un rotor 2 et un enroulement induit 3 qui délivre un signal de forme représentée par la figure 3 – ligne A lorsque ce générateur est entraîné en rotation, par le moteur à combustion interne, non représenté.

De façon connue, notamment par le document FR-A- 1 455 180, le circuit 5 pour retarder l'allumage du moteur, pendant la phase de démarrage, comporte: une première entrée E1 reliée à la sortie 3a de l'enroulement induit 3 du générateur de signaux 1 et une deuxième entrée E2 connectée à une position 6a correspondante à la fonction allumage de la clé de contact 6 d'un véhicule automobile, laquelle clé de contact 6 est reliée à la borne positive 7a de la batterie 7 du véhicule.

Une troisième entrées E3 est reliée à la position 6b de la clé de contact 6, position correspondante à la fonction démarrage, fonction pendant laquelle le démarreur est alimenté par l'intermédiaire d'un contacteur électromagnétique, non représenté.

La sortie S du circuit 5 est connectée à l'entrée 8a d'un circuit 8, dont la sortie 8b commande un interrupteur semiconducteur 9 connecté en série avec l'enroulement primaire 10 d'une bobine élévatrice de tension 11 dont l'enroulement secondaire 12 est relié consécutivement aux bougies d'allumage par le distributeur 4. Le circuit de commande 8 et l'interrupteur semiconducteur 9 qui délivrent une étincelle d'allumage d'énergie constante aux électrodes des bougies d'allumage 13 à 16 peuvent être du type connu notamment par le document FR-A- 2 416 357. L'entrée 8a du circuit de commande 8 est reliée à la sortie 3a de l'enroulement induit 3 par un réseau de résistances 17, 18 et 19 d'atténuation des signaux alternatifs issus de l'enroulement induit 3 du générateur 1.

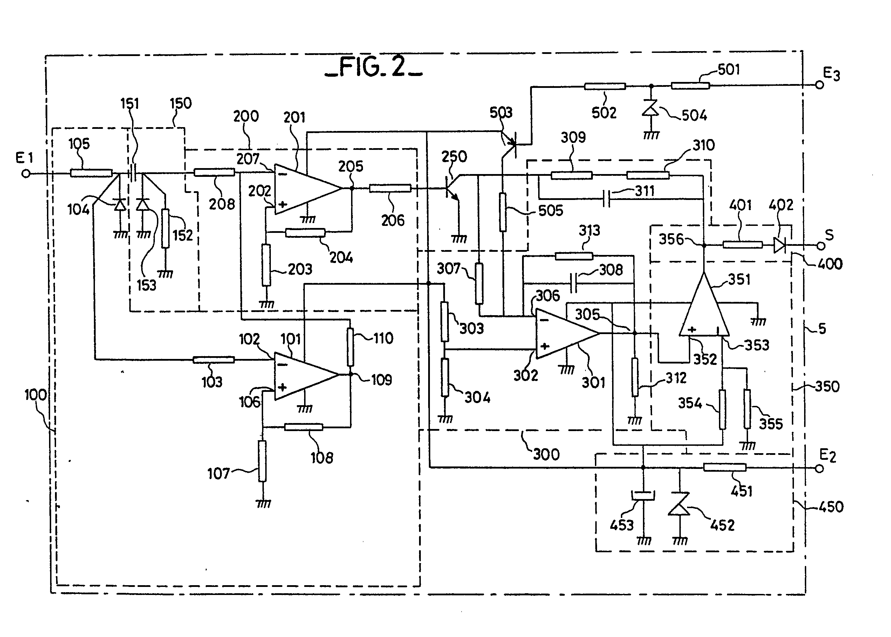

Pour la mise en œuvre du procédé selon l'invention, le circuit 5, représenté par la figure 2, comporte des premiers moyens 100 de mise en forme de la partie positive des signaux issus de l'enroulement induit 3 entre un seuil s1 et leur valeur nulle V0, figure 3 lignes A et C; des moyens dérivateurs 150 qui génèrent des signaux indicateurs de la valeur maximale positive V1 des signaux issus de l'enroulement induit 3, figure 3 – ligne B, les signaux générés par les premiers moyens 100 de mise en forme et les moyens dérivateurs 150 étant appliqués à l'entrée 207 de deuxièmes moyens 200 de mise en forme dont la sortie 205 délivre des signaux de durée correspondante à l'écart angulaire entre la valeur maximale V1 et la valeur nulle V0 des signaux du générateur 1, figure 3 – ligne D à un transistor 250 relié à des moyens d'intégration 300 qui commandés par le transistor 250 assurent la charge et la décharge d'un condensateur 308, figure 3 – ligne E, la sortie 305 des moyens d'intégration 300 étant reliée à l'entrée 352 de moyens de comparaison 350 qui délivrent à leur sortie 356 des signaux de durée équivalente aux durées de charge et de décharge du condensateur 308, figure 3 – ligne F, lesquels signaux ajoutés, par l'intermédiaire d'un mélangeur 400 aux signaux issus du générateur 1 retardent d'un angle α constant, figure 3 – ligne G, par l'intermédiare du circuit de commande 8 et de l'interrupteur semiconducteur 9 l'allumage du moteur à combustion interne, pendant la phase de démarrage.

L'entrée E2 du circuit 5, connectée à la position 6a, position allumage de la clé de contact 6, figure 1, alimente les premiers moyens 100 et les deuxièmes moyens 200 de mise en forme, les moyens d'intégration 300 et les moyens de comparaison 350 par un circuit 450 d'alimentation stabilisée, figure 2.

Ce circuit 450 comprend, de façon connue, une résistance limitatrice de courant 451 alimentant une diode Zener 452 qui, dans cet exemple de réalisation, fixe la tension d'alimentation à 6,8 volts. Le circuit 450 comprend, également de façon connue, un condensateur 453 de filtrage des surtensions provenant des consommateurs selfiques dont est muni le véhicule automobile, tel, par exemple, que le contacteur électromagnétique du démarreur.

L'entrée E3 du circuit 5 connectée à la position 6b, position de démarrage de la clé de contact 6, figure 1, est reliée par l'intermédiaire d'une résistance 501 et d'une résistance 502 à la base d'un transistor 503 dont l'émetteur est alimenté par l'alimentation stabilisée 450, figure 2, le collecteur du transistor 503 étant relié par une résistance 505 à l'entrée 306 de l'amplificateur opérationnel 301 des moyens d'intégration 300.

Une diode Zener 504 dont la cathode est connectée au point commun des résistances 501 et 502, et dont l'anode est reliée directement au pôle négatif du circuit 5, protège le transistor 503 contre les surtensions produites par le contacteur électromagnétique du démarreur.

La résistance 501 a pour fonction de limiter le courant dans la diode Zener 504 lorsque celle-ci conduit sous l'effet des surtensions provoquées par le contacteur électromagnétique lors de l'arrêt de l'alimentation de celui-ci, c'est à dire lorsque la phase de démarrage est terminée, le moteur tournant par ses propres moyens et que en conséquence la clé de contact 6 est ramenée sur la position 6a, position allumage.

Dans un mode préféré de réalisation, figure 2, les premiers moyens 100 de mise en forme qui effectuent la mise en forme, figure 3 – ligne C, de la partie positive des signaux issus de l'enroulement induit 3 du générateur 1 entre un seuil s1 et leur valeur nulle V0, figure 3 – ligne A, sont constitués d'un amplificateur opérationnel 101, monté en comparateur.

L'entrée inverseuse 102 de l'amplificateur opérationnel 101 est connectée par l'intermédiaire d'une résistance limitatrice de courant 103 à la cathode d'un diode 104 d'élimination des composantes négatives des signaux du générateur 1, lesquelles composantes importantes aux grandes vitesses de rotation du rotor 2 perturberaient le fonctionnement de l'amplificateur opérationnel 101.

La cathode de la diode 104 est reliée à une des extrémités d'une résistance 105, qui limite le courant traversant la diode 104, lors de l'élimination des composantes négatives, l'autre extrémité de la résistance 104 est connectée à l'entrée E1 connectée à la sortie 3a de l'enroulement induit 3, figure 1.

L'entrée positive 106 de l'amplificateur opérationnel 101 est reliée au point commun de résistances 107 et 108, l'une des extrémités de la résistance 107 étant connectée au pôle négatif, l'une des extrémités de la résistance 108 étant reliée à la sortie 109 de l'amplificateur opérationnel 101.

Le point commun des résistances 107 et 108 fixe à un niveau de 68 millivolts la tension appliquée à l'entrée positive 106 de l'amplificateur opérationnel 101, le niveau de 68 millivolts correspondant au seuil s1, la valeur nulle V0 étant appliquée à l'entrée inverseuse 102.

La sortie 109 de l'amplificateur opérationnel 101 délivre des signaux mis en forme rectangulaire, figure 3 – ligne C, pour la partie positive des signaux issus de l'enroulement induit 3, du générateur 1, partie positive comprise entre le seuil s1 et leur valeur nulle V0, figure 3 – ligne A.

Ces signaux ainsi mis en forme sont appliqués, par l'intermédiaire d'une résistance 110 à l'entrée 207 des deuxièmes moyens 200 de mise en forme.

Dans un mode préféré de réalisation, les moyens dérivateurs 150 figure 2, qui génèrent des signaux indicateurs de la valeur maximale positive V1 des signaux issus de l'enroulement induit 3, figure 3 – ligne A, sont constitués d'un condensateur 151 relié par une de ses extrémités au point commun de la résistance 105 et de diode 104 des premiers moyens 100 de mise en forme, l'autre extrémité du condensateur 151 étant reliée au pôle négatif du circuit 5 par l'intermédiaire d'une résistance 152 et d'autre part, à la cathode d'une diode 153 dont l'anode est reliée au pôle négatif du circuit 5.

Les valeurs de la tension présente aux bornes du condensateur 151 sont la dérivée, figure 3 – ligne B, des signaux issus de l'enroulement induit 3.

Les valeurs négatives trop importantes de la tension présente aux bornes du condensateur 151, sont limitées à −0,6 volt par la diode 153 qui en dessous de cette valeur devient conductrice et élimine lesdites valeurs négatives par le pôle négatif auquel est reliée l'anode de la diode 153, figure 2.

La valeur moyenne de la dérivée est fixée à 0 volt, figure 3 – ligne B, par la résistance 152, figure 2, laquelle valeur de 0 volt est indicatrice de la valeur maximale positive V1, figure 3 – ligne A, des signaux issus de l'enroulement induit 3.

Dans un mode préféré de réalisation les deuxièmes moyens 200 de mise en forme dont la sortie 205 délivrent des signaux, de durée correspondante à l'écart angulaire entre la valeur maximale positiv V1 et la valeur nulle V0 des signaux issus de l'enroulement induit 3, au transistor 250, figure 3 – ligne D, sont constitués d'un amplificateur opérationnel 201, figure 2, monté en comparateur, dont l'entrée positive 202 est connectée au point commun de résistances 203 et 204, l'une des extrémités de la résistance 203 étant connectée au pôle négatif du circuit 5, l'une des extrémités de la résistance 204 étant reliée à la sortie 205 de l'amplificateur opérationnel 201.

Le point commun des résistances 203 et 204 fixe à un niveau de 30 millivolts la tension appliquée à l'entrée positive 202 de l'amplificateur opérationnel 201.

La sortie 205, de l'amplificateur opérationnel 201, est reliée à la base du transistor 250, par l'intermédiaire d'une résistance limitatrice de courant 206.

L'entrée inverseuse 207 de l'amplificateur opérationnel 201 est connectée, par l'intermédiaire d'une résistance 208 au point commun de la cathode de la diode 153, de la résistance 152 et du condensateur 151 qui constituent les moyens dérivateurs 150.

Dans un mode préféré de réalisation, les moyens d'intégration 300, figure 2, qui commandés par le transistor 250, assurent la charge et la décharge du condensateur 308, figure 3 – ligne E, sont constitués d'un amplificateur opérationnel 301 dont l'entrée positive 302 est connectée au point commun de résistances 303 et 304, l'une des extrémités de la résistance 303 étant reliée au circuit d'alimentation stabilisée 450, l'une des extrémités de la résistance 304 étant connecté au pôle négatif du circuit 5.

Le point commun des résistance 303 et 304 fixe à un niveau de 200 millivolts la tension appliquées à l'entrée positive 302 de l'amplificateur opérationnel 301.

La sortie 305 de l'amplificateur opérationnel 301 est reliée à l'entrée positive 352 des moyens de comparaison 350, l'entrée inverseuse 306 de l'amplificateur opérationnel 301 étant connectée d'une part au collecteur du transistor 250, par l'intermédiaire d'une résistance 307, limitant le courant de charge du condensateur 308, et, d'autre part, à la sortie 356 des moyens de comparaison 350, par l'intermédiaire d'un réseau de résistances 309 et 310 qui en association avec la résistance 307 limite le courant de décharge du condensateur 308, à un coefficient k prédéterminé par la valeur ohmique desdites résistances.

Le fonctionnement des moyens d'intégration 300 et de comparaison 350 est stabilisé par un condensateur 311 qui évite l'oscillation de ces moyens aux fréquences élevées.

Une résistance 312 connectée entre le pôle négatif du circuit 5 et la sortie 305 de l'amplificateur opérationnel 301 fixe la valeur de la tension de sortie de cet amplificateur à une valeur inférieure à la tension d'alimentation de cet amplificateur.

Une résistance 313 connectée aux bornes du condensateur 308 linéarise la charge et la décharge de ce condensateur.

Dans un mode préféré de réalisation, les moyens de comparaison 350 figure 2, qui délivrent à leur sortie 356, figure 3 – ligne F, des signaux de durée équivalente aux durées de charge et de décharge du condensateur 308, sont constitués d'un amplificateur opérationnel 351 dont l'entrée positive 352 est reliée à la sortie 305 des moyens d'intégration 300, l'entrée inverseuse 353 de l'amplificateur opérationnel 351 étant connectée au point commun de résistances 354 et 355, l'une des extrémités de la résistance 354 étant reliée au circuit d'alimentation stabilisée 450, l'une des extrémités de la résistance 355 étant connectée au pôle négatif du circuit 5.

Le point commun des résistances 354 et 355 fixe à un niveau de 200 millivolts la tension appliquée à l'entrée inverseuse 353 de l'amplificateur opérationnel 351.

Dans un mode préféré de réalisation, le mélangeur 400, figure 2, est constitué d'une résistance 401 et d'une diode 402.

Le mélangeur 400 ajoute aux signaux issus du générateur 1, les signaux provenant de la sortie 356 des moyens de comparaison 350, de manière telle que la sortie S du circuit 5 retarde d'un angle α constant, figure 3 – ligne G, par l'intermédiaire du circuit de commande 8, figure 1, et de l'interrupteur semiconducteur 9, l'allumage du moteur à combustion interne, pendant sa phase de démarrage.

La résistance 401 atténue la valeur de la tension du signal délivré par la sortie 356, de manière à ne pas perturber l'entrée 8a du circuit 8, entrée 8a à laquelle sont appliqués, d'une part, les signaux de retard, à l'allumage, délivrés par la sortie 356, et, d'autre part, les signaux de déclenchement de l'allumage délivrés par l'enroulement induit 3 du générateur 1, lesquels signaux de déclenchement sont atténués par le réseau de résistance 17, 18, 19 figures 1 et 2.

La diode 402 dont l'anode est connectée à l'une des extrémités de la résistance 401 et dont la cathode constitue la sortie S du circuit 5, évite que les signaux délivrés par l'enroulement induit 3, du générateur 1, soient appliqués à la sortie 356. Le fonctionnement du dispositif est le suivant:

Lorsque le moteur à combustion interne est entraîné en rotation par le démarreur électrique, la sortie 3a de l'enroulement induit 3 du générateur 1, délivre des signaux alternatifs à l'entrée E1 du circuit 5, lesquels signaux, figure 3 – ligne A, sont mise en forme rectangulaire, figure 3 – ligne C, par les premiers moyens 100, entre le seuil s1 de valeur 68 millivolts et leur valeur nulle V0, figure 3 – ligne A.

Simultanément les signaux alternatifs délivrés par la sortie 3a de l'enroulement induit 3, sont dérivés par les moyens dérivateurs 150, de manière à générer des signaux, figure 3 – ligne B, indicateurs de la valeur maximale positive V1, figure 3 – ligne A, des signaux délivrés par la sortie 3a de l'enroulement induit 3. Les signaux délivrés par la sortie 109 des premiers moyens 100, de mise en forme rectangulaire, et les signaux générés par les moyens dérivateurs 150 sont appliqués à l'entrée 207, des deuxièmes moyens 200 de mise en forme, dont la sortie 205, figure 2, délivre des signaux de forme rectangulaire, figure 3 – ligne D, de durée correspondante à la valeur maximale positive V1 et la valeur nulle V0, figure 3 – ligne A, des signaux issus de l'enroulement induit 3 du générateur 1.

Pour le dispositif de l'invention, plus particulièrement adapté à l'allumage d'un moteur à quatre cylindres, cette durée qui correspond à 1/10e de la période T des signaux alternatifs issus de l'enroulement 3 du générateur 1, vaut en conséquence 9 degrés de part et d'autre du point de tension nulle V0, figure 3 – ligne A. Ces 9 degrés correspondent à une rotation de 18 degrés du vilebrequin du moteur, le générateur 1, logé dans le boîtier du distributeur 4, étant entraîné à la moitié de la vitesse du moteur. Le transistor 250 dont la base est reliée, par l'intermédiaire de la résistance 206, à la sortie 205 des deuxièmes moyens 200 de mise en forme, est en conséquence rendu conducteur pendant la durée correspondante à la valeur maximale positive V1 et la valeur nulle V0 des signaux délivrés par l'enroulement induit 3. Lorsque le transistor 250 est non conducteur, la sortie 356 de l'amplificateur opérationnel 351, des moyens de comparaison 350, est à un niveau de tension de 200 millivolts, correspondant au niveau de tension appliqué à l'entrée inverseuse 353, et la sortie 305 de l'amplificateur opérationnel 301, des moyens d'intégration 300, est à un niveau de tension de 150 millivolts correspondant au niveau de tension appliqué à l'entrée inverseuse 306.

Lorsque le transistor 250, devient conducteur, c'est à dire pendant la durée correspondante à la valeur maximale V1 et la valeur nulle V0 des signaux délivrés par l'enroulement induit 3, le condensateur 308 se charge, figure 3 – ligne E, avec une valeur de courant correspondante au rapport entre le niveau de tension appliqué à l'entrée positive 302 de l'amplificateur opérationnel 301 et la valeur ohmique de la résistance 307 connectée à l'entrée inverseuse 306 de l'amplificateur opérationnel 301.

La charge du condensateur 308 entraîne une élévation du niveau de la tension présente à la sortie 305 de l'amplificateur 301 et dès que ce niveau est supérieur à 150 millivolts, la sortie 356 de l'amplificateur 351, des moyens de comparaison 350, atteint le niveau de tension de 6,8 volts, la polarité relative de ses entrées 352 et 353 s'étant inversée du fait de la charge du condensateur 308.

A la fin du signal généré par la sortie 205, de l'amplificateur opérationnel 201, des deuxièmes moyens 200, de mise en forme, figure 3 – ligne D, le transistor 250 devient non conducteur. La sortie 356 de l'amplificateur opérationnel 351, des moyens de comparaison 350, conserve son niveau de tension de 6,8 volts, figure 3 – ligne F, et le condensateur 308 se décharge, figure 3 – ligne E selon un coefficient $k$ prédéterminé par la valeur ohmique des résistances 307, 309, 310.

Lorsque, du fait de la décharge du condensateur 308, la tension à la sortie 305, de l'amplificateur opérationnel 301 des moyens d'intégration 300, atteint le niveau de 200 millivolts correspondant au niveau de l'entrée inversante 353, de l'amplificateur opérationnel 351, des moyens de comparaison 350, la sortie 356 dudit amplificateur revient à son niveau initial de 200 millivolts et le condensateur 308 est prêt à se charger de nouveau.

En résumé, la sortie 356, des moyens de comparaison 350, délivre des signaux, figure 3 – ligne F, de durée équivalente aux durées de charge et de décharge du condensateur 308.

Cette durée résulte, d'une part, de la charge du condensateur 308 pendant la durée correspondante à l'écart angulaire entre la valeur maximale positive V1 et la valeur nulle V0 des signaux délivrés par l'enroulement induit 3 et, d'autre part de la décharge du condensateur 308 suivant le coefficient $k$ prédéterminé par le choix des valeurs ohmique des résistances 307, 309 et 310.

En conséquence la sortie S du circuit 5, figure 3 – ligne G, procure un signal retardé d'un angle α constant à l'entrée 8a du circuit de commande 8 de l'interrupteur semiconducteur 9, lequel circuit de commande 8, lorsqu'il provoque, de façon connue par le brevet français numéro de publication 2 416 357, l'état de non conduction de l'interrupteur semiconducteur 9, fait jaillir consécutivement, par l'intermédiaire du distributeur 4, des étincelles d'énergie constante aux électrodes des bougies d'allumage 13 à 16.

Lorsque la phase de démarrage du moteur est terminée, c'est à dire que le moteur est entraîné en rotation par ses propres moyens, la clé de contact 6, voir figure 1, est ramenée de la position 6b de démarrage à la position 6a correspondante à l'allumage.

En conséquence le transistor 503, de type PNP, dont la base est alimentée par la batterie 7 au travers des résistances 501, 502 et de la position 6b, démarrage, de la clé de contact 6, et qui était de ce fait non conducteur, devient conducteur.

Dans cet exemple de réalisation, la conduction du transistor 503 fait apparaître à l'entrée inverseuse 306, de l'amplificateur opérationnel 301, une tension de valeur égale à 6,6 volts lorsque le transistor 250 conduit et une tension de valeur égale à 3,3 volts lorsque le transistor 250 est non conducteur.

Ces tensions dont la valeur est plus élevée que la valeur de 150 millivolts appliquée à l'entrée inverseuse 306 au début de la charge du condensateur 308 provoque la non conduction de la sortie 305 de l'amplificateur opérationnel 301 et en conséquence la non conduction de la sortie 356 de l'amplificateur opérationnel 351. De ce fait la sortie S du circuit 5 ne délivre plus de signal de retard, d'angle α constant, à l'entrée 8a du circuit de commande 8 de l'interrupteur semiconducteur 9, dès que la phase de démarrage du moteur est terminée.

Dans l'exemple de réalisation ci-dessus décrit, les valeurs ohmiques des résistances 307, 309, 310, qui déterminent le coefficient $k$ de décharge du condensateur 308, sont choisis de manière telle que le retard à l'allumage, pendant la phase de démarrage, est de 10 degrés au niveau du distributeur 4, c'est à dire 20 degrés au niveau du vilebrequin du moteur, valeur pouvant être augmentée ou diminuée par le choix d'autres valeurs ohmiques.

Selon le mode préféré de réalisation, les composants du circuit 5 sont les suivants:

| Repères | | | | | |
|---|---|---|---|---|---|
| 105, 206, 307 | = | Résistances: | 27 | KΩ | 1/4 W |
| 103, 108, 208 | = | | 100 | KΩ | 1/4 W |
| 152 | = | | 1 | MΩ | 1/4 W |
| 203 | = | | 10 | KΩ | 1/4 W |
| 204, 401 | = | | 220 | KΩ | 1/4 W |
| 110 | = | | 820 | KΩ | 1/4 W |
| 107, 304, 355 | = | | 1 | KΩ | 1/4 W |
| 501, 502 | = | | 4,7 | KΩ | 1/4 W |
| 303, 354, 505 | = | | 33 | KΩ | 1/4 W |

Repères

| | | | | |
|---|---|---|---|---|
| 309 | = | 470 | KΩ | 1/4 W |
| 310 | = | 680 | KΩ | 1/4 W |
| 312 | = | 820 | Ω | 1/4 W |
| 313 | = | 3,3 MΩ | | 1/4 W |
| 451 | = | 220 | Ω | 1/2 W |
| 151 | = condensateur polyester = 22 manofarads | | | |
| 308 | = condensateur polyester = 0,22 microfarad | | | |
| 311 | = condensateur céramique = 470 picofarads | | | |
| 453 | = condensateur chimique = 220 microfarads | | | |
| 250 | = Transistor BC 170 | | | |
| 404 | = Transistor BC 327 | | | |
| 104, 153, 402 | = Diode 1N 4148 | | | |
| 452 | = Diode Zener DZ1–PL 6,8 | | | |
| 504 | = Diode Zener DZ2–33 V | | | |
| 101, 201, 301, 351 | = quadramplificateur – LM 324 | | | |
| | Société National Semiconducteurs. | | | |

**Revendications**

1. Procédé d'obtention d'un retard à l'allumage d'un moteur à combustion interne, pendant la phase de démarrage, caractérisé en ce que l'on détermine l'écart angulaire entre la valeur maximale positive V1 et la valeur nulle V0 des signaux issus de l'enroulement induit d'un générateur de signaux alternatifs, lequel écart angulaire multiplié par un coefficient *k* prédéterminé procure un angle α constant correspondant au retard à l'allumage désirés.

2. Dispositif pour la mise en œuvre du procédé selon la revendication 1, comprenant un générateur (1) de signaux alternatifs; un circuit pour retarder l'allumage du moteur à combustion interne, pendant la phase de démarrage, circuit (5) comportant une première entrée (E1) reliée à la sortie 3a de l'enroulement induit 3 du générateur de signaux (1), une deuxième entrée (E2) connectée à une position (6a), allumage, d'une clé de contact (6), une troisième entrée (E3) reliée à une position (6b) démarrage, de ladite clé (6) et une sortie S connectée à l'entrée (8a) d'un circuit de commande (8) d'un interrupteur semiconducteur (9) connecté en série avec l'enroulement primaire (10) d'une bobine élévatrice de tension (11) dont l'enroulement secondaire (12) est relié consécutivement aux bougies d'allumage (13 à 16) par un distributeur (4) caractérisé en ce que le circuit (5) pour retarder l'allumage du moteur à combustion interne, comporte des premiers moyens (100) de mise en forme de la partie positive des signaux issus de l'enroulement induit (3) du générateur (1) entre un seuil s1 et leur valeur nulle V0; des moyens dérivateurs (150) qui génèrent des signaux indicateurs de la valeur maximale positive V1 des signaux issus de l'enroulement induit (3), les signaux générés par les moyens (100 et 150) étant appliqués à l'entrée (207) de deuxièmes moyens (200) de mise en forme dont la sortie (205) délivre des signaux, de durée correspondante à l'écart angulaire entre la valeur maximale V1 et la valeur nulle V0 des signaux issus de l'enroulement induit (3) à un transistor (250) relié à des moyens d'intégration (300) qui commandés par le transistor (250) assurent la charge et la décharge d'un condensateur (308), la sortie (305) des moyens intégration étant reliée à l'entrée (352) de moyens de comparaison (350) qui délivrent à leur sortie (356) des signaux de durée équivalente aux durées de charge et de décharge du condensateur (308) lesquels signaux ajoutés par l'intermédiaire d'un mélangeur (400) aux signaux issus de l'enroulement induit (3) du générateur (1) retardent d'un angle α constant, par l'intermédiaire du circuit de commande (8) et de l'interrupteur semiconducteur (9) l'allumage du moteur à combustion interne.

3. Dispositif selon la revendication 2, caractérisé en ce que les premiers moyens (100) de mise en forme qui effectuent la mise en forme de la partie positive des signaux issus de l'enroulement induit (3) du générateur (1) entre un seuil s1 et leur valeur nulle V0, sont constitués d'un amplificateur opérationnel (101) monté en comparateur, dont l'entrée inverseuse (102) est connectée par l'intermédiaire d'une résistance (103) au point commun de la cathode d'une diode (104) et d'une résistance (105), l'entrée positive (106) dudit amplificateur étant reliée au point commun de résistances (107, 108) lequel amplificateur à sa sortie (109) connectée à l'entrée inverseuse (207), des deuxièmes moyens (200) de mise en forme, par l'intermédiaire d'une résistance (110).

4. Dispositif selon la revendication 2, caractérisé en ce que les moyens dérivateurs (150) qui génèrent des signaux indicateurs de la valeur maximale positive V1 des signaux issus de l'enroulement induit (3) du générateur (1) sont constitués d'un condensateur (151) relié par une de ses extrémités au point commun de la résistance (105) et de la diode (104) des premiers moyens (100) de mise en forme, l'autre extrémité du condensateur (151) étant reliée au pôle négatif par l'intermédiaire d'une résistance (152) et, d'autre part, à la cathode d'une diode (153) dont l'anode est reliée au pôle négatif.

5. Dispositif selon la revendication 2, caractérisé en ce que les deuxièmes moyens (200) de mise en forme dont la sortie (205) délivre des signaux de durée correspondante à l'écart angulaire entre la valeur maximale V1 et la valeur nulle V0, des signaux issus de l'enroulement induit (3) du générateur (1) au transistor (250) sont constitués d'un amplificateur opérationnel (201), monté en comparateur, dont l'entrée positive (202) est connectée au point commune de résistances (203, 204) lequel amplificateur à sa sortie (205) reliée, par l'intermédiaire d'une résistance (206) à la base du transistor (250) et son entrée inverseuse (207) connectée, par l'intermédiaire d'une résistance (208) au point commun de la cathode de la diode (153), de la résistance (152) et du condensateur (151).

6. Dispositif selon la revendication 2, caractérisé en ce que les moyens d'intégration (300) commandés par le transistor (250) sont constitués d'un amplificateur opérationnel (301) dont l'entrée positive (302) est connectée au point commun de résistances (303, 304) lequel amplificateur à sa sortie (305) reliée à l'entrée positive (352) des moyens de comparaison (350), l'entrée inverseuse (306) de amplificateur (301) étant connectée d'une part, au collecteur du transistor (250) par l'intermédiaire d'une résistance (307) limitant le courant de charge du condensateur (308) et, d'autre part, à la sortie (356) des moyens de comparaison (350) par l'intermédiaire d'un réseau de résistances (309, 310) qui en association avec la résistance (307) limite le courant de décharge du condensateur (308) le fonctionnement des moyens d'intégration (300) et de comparaison (350) étant stabilisé par un condensateur (311).

7. Dispositif selon la revendication 2, caractérisé en ce que les moyens de comparaison (350) sont constitués d'un amplificateur opérationnel (351), dont l'entrée positive (352) est reliée à la sortie (305) des moyens d'intégration (300), l'entrée inverseuse (353) dudit amplificateur (351) étant connectée au point commun de résistances (354, 355) la sortie (356) de l'amplificateur (351) étant connectée à l'extrémité d'une résistance (401) dont l'autre extrémité est reliée à l'anode d'une diode (402) dont la cathode constitue la sortie S du circuit (5).

**Patentansprüche**

1. Verfahren zur Erzeugung einer Zündverzögerung für einen Verbrennungsmotor während der Anlassphase, dadurch gekennzeichnet, dass die Phasenverschiebung zwischen dem positiven Maximalwert (V1) und dem Nullwert (V0) der von der Induktionswicklung eines Wechselsignalgenerators erzeugten Signale bestimmt wird, die, mit einem vorbestimmten Koeffizienten $k$ multipliziert, einen konstanten Phasenwinkel ($\alpha$) ergibt, der der gewünschten Zündverzögerung entspricht.

2. Vorrichtung zur Durchführung des Verfahrens nach Anspruch 1, mit einem Wechselsignalgenerator (1), sowie mit einer Schaltung (5) zur Zündverzögerung des Verbrennungsmotors während der Anlassphase, die

einen mit dem Ausgang (3a) der Induktionswicklung (3) des Wechselsignalgenerators (1) verbundenen ersten Eingang (E1),

einen mit der Zündkontaktposition (6a) eines Zündschlossschalters (6) verbundenen zweiten Eingang (E2),

einen mit der Anlasskontaktposition (6b) des Zündschlossschalters (6) verbundenen dritten Eingang (E3)

sowie einen Ausgang (S) besitzt, der mit dem Eingang (8a) eines Steuerkreises (8) für einen Halbleiterschalter (9) verbunden ist, der mit der Primärwicklung (10) einer Zündspule (11) in Reihe geschaltet ist, deren Sekundärwicklung (12) über einen Zündverteiler 4) nacheinander mit den Zündkerzen (13 bis 16) verbindbar ist, dadurch gekennzeichnet,

dass die Schaltung (5) zur Zündverzögerung des Verbrennungsmotors eine erste Impulsformerschaltung (100) zur Formung des positiven Teils der von der Induktionswicklung (3) des Wechselsignalgenerators (1) abgegebenen Signals zwischen einem Schwellenwert (s1) und ihrem Nullwert V0, sowie eine Differenzierschaltung (150) zur Erzeugung von Signalen umfasst, die den positiven Maximalwert (V1) der von der Induktionswicklung (3) abgegebenen Signale kennzeichnend sind,

dass die von der genannten Impulsformerschaltung (100) und der Differenzierschaltung (150) erzeugten Signale an den Eingang (207) einer zweiten Impulsformerschaltung (200) angelegt werden, deren Ausgang (205) Signale, deren Dauer der Phasenverschiebung zwischen dem Maximalwert (V1) und dem Nullwert (V0) der von der Induktionswicklung (3) abgegebenen Signale entspricht, an einen Transistor (250) liefert, der mit einer Integrationsschaltung (300) verbunden ist, die unter dem Steuereinfluss des Transistors (250) das Aufladen und das Entladen eines Kondensators (308) bewirkt,

und dass der Ausgang (305) der Integrationsschaltung (300) mit dem Eingang (352) einer Vergleichereinrichtung (350) verbunden ist, die an ihrem Ausgang (356) Signale liefert, deren Dauer den Auflade- und Entladezeiten des Kondensators (309) entspricht und die über einen Mischer (400) den von der Induktionswicklung (3) des Wechselsignalgenerators erzeugten Signalen zugefügt werden und über den Steuerkreis (8) und den Halbleiterschalter (9) die Zündung des Verbrennungsmotors um einen konstanten Winkel ($\alpha$ verzögern.

3. Vorrichtung nach Anspruch 2, dadurch gekennzeichnet, dass die erste Impulsformerschaltung (100), die den positiven Teil der von der Induktionswicklung (3) des Wechselsignalgenerators (1) abgegebenen Signale zwischen einem Schwellenwert (s1) und ihrem Nullwert (V0) formt, von einem als Komparator geschalteten Operationsverstärker (101) gebildet sind, dessen invertierender Eingang (102) über einen Widerstand (103) mit dem gemeinsamen Punkt der Kathode einer Diode (104) und eines Widerstands (105) verbunden ist, dessen nichtinvertierender Eingang (106) mit dem gemeinsamen Punkt von Widerständen (107, 108) verbunden ist, und dessen Ausgang (109) über einen Widerstand (101) mit dem invertierenden Eingang (207) der zweiten Impulsformerschaltung (200) verbunden ist.

4. Vorrischtung nach Anspruch 2, dadurch gekennzeichnet, dass die Differenzierschaltung (150), die Signale erzeugt, welche für den positiven Maximalwert (V1) der von der Induktionswicklung (3) des Wechselsignalgenerators (1) abgegebenen Signale kennzeichnend sind, aus einem Kondensator (151) besteht, der mit einem seiner Anschlüsse mit dem gemeinsamen Punkt des Widerstands (105) und der Diode (104) der ersten Impulsformerschaltung (100) und mit seinem anderen Anschluss über einen Widerstand (152) mit dem negativen Pol und andererseits mit der Kathode einer Diode (153) verbunden ist, deren Anode mit dem negativen Pol verbunden ist.

5. Vorrichtung nach Anspruch 2, dadurch gekennzeichnet, dass die zweite Impulsformerschaltung (200), deren Ausgang (205) an den Transistor (250) Signale liefert, deren Dauer der Phasenverschiebung zwischen dem Maximalwert (V1) und dem Nullwert (V0) der von der Induktionswicklung (3) des Wechselsignalgenerators (1) abgegebenen Signale entspricht, von einem als Komparator geschalteten Operationsverstärker (201) gebildet ist, dessen nichtinvertierender Eingang (202) mit dem gemeinsamen Punkt von Widerständen (203, 204) verbunden ist, dessen Ausgang (205) über einen Widerstand (206) mit der Basis des Transistors (250) und dessen invertierender Eingang (207) über einen Widerstand (208) mit dem gemeinsamen Punkt der Kathode der Diode (153), des Widerstands (152) und des Kondensators (151) verbunden ist.

6. Vorrichtung nach Anspruch 2, dadurch gekennzeichnet, dass die von dem Transistor (250) gesteuerte Integrationsschaltung (300) einen Operationsverstärker (301) umfasst, dessen nichtinvertierender Eingang (302) mit dem gemeinsamen Punkt zweier Widerstände (303, 304), dessen Ausgang (305) mit dem nichtinvertierenden Eingang (352) der Vergleichereinrichtung (350) und dessen invertierender Eingang (306) einerseits über einen den Aufladestrom des Kondensator (308) begrenzenden Widerstand (307) mit dem Kollektor des Transistors (250) und andererseits über ein Widerstandsnetzwerk (309, 310), das zusammen mit dem genannten Widerstand (307) den Entladestrom des Kondensators (308) begrenzt, mit dem Ausgang (356) der Vergleichereinrichtung (350) verbunden ist, und dass die Betriebsfunktion der Integrationsschaltung (300) und der Vergleichereinrichtung (350) durch einen Kondensator (311) stabilisiert ist.

7. Vorrichtung nach Anspruch 2, dadurch gekennzeichnet, dass die Vergleichereinrichtung (350) von einem Operationsverstärker (251) gebildet sind, dessen nichtinvertierender Eingang (352) mit dem Ausgang (305) der Integrationsschaltung (300), dessen invertierender Eingang (353) mit dem gemeinsamen Punkt von Widerständen (354, 355) und dessen Ausgang (356) mit einem Anschluss eines Widerstands (401) verbunden ist, dessen anderer Anschluss mit der Anode einer Diode (402) verbunden ist, deren Kathode den Ausgang (S) der Schaltung (5) zur Zündverzögerung darstellt.

**Claims**

1. Process for obtaining an ignition delay in an internal-combustion engine during the starting phase, characterised in that the angular difference between the maximum positive value V1 and the zero value V0 of the signals coming from the armature winding of an alternating-signal generator is determined, and this angular difference multiplied by a predetermined co-efficient $k$ produces a constant angle α corresponding to the desired ignition delay.

2. Device for carrying out the process according to Claim 1, incorporating an alternating-signal generator (1); a circuit for delaying the ignition of the internal-combustion engine during the starting phase, the circuit (5) comprising a first input (E1) connected to the output (3a) of the armature winding (3) of the signal generator (1), a second input (E2) connected to an ignition position (6a) of a switsch key (6), a third input (E3) connected to a starting position (6b) of the said key (6) and an output (S) connected to the input (8a) of a control circuit (8) of a semi-conductor switch (9) connected in series with the primary winding (10) of a booster coil (11), the secondary winding (12) of which is connected consecutively to the spark plugs (13 to 16) by means of a distributor (4), characterised in that the circuit (5) for delaying the ignition of the internal-combustion engine comprises first means (100) of shaping the positive part of the signals coming from the armature winding (3) of the generator (1) between a threshold s1 and their zero value V0; shunting means (150) generating signals indicating the maximum positive value V1 of the signals coming from the armature winding (3), the signals generated by the means (100 and 150) being applied to the input (207) of second shaping means (200), the output (205) of which supplies signals, of a length corresponding to the angular difference between the maximum value V1 and the zero value V0 of the signals coming from the armature winding (3), to a transistor (250) connected to integration means (300) which, controlled by the transistor (250), ensure the charging and discharging of a capacitor (308), the output (305) of the integration means being connected to the input (352) of comparison means (350) which supply at their output (356) signals of a length equivalent to the charging and discharging times of the capacitor (308), these signals, added by means of a mixer (400) to the signals coming from the armature winding (3) of the generator (1), delaying the ignition of the internal-combustion engine over a constant angle α by means of the control circuit (8) and the semi-conductor switch (9).

3. Device according to Claim 2, characterised in that the first shaping means (100) which shape the positive part of the signals coming from the armature winding (3) of the generator (1) between a threshold s1 and their zero value V0 consist of an operational amplifier (101) connected as a comparator, the inverting input (102) of which is connected by means of a resistor (103) to the common point of the cathode of a diode (104) and a resistor (105), the positive input (106) of the said amplifier being connected to the common point of resistors (107, 108), and this amplifier being connected at its output (109) to the inverting input (207) of the second shaping means (200) by means of a resistor (110).

4. Device according to Claim 2, characterised in that the shunting means (150) generating signals indicating the maximum positive value V1 of the signals coming from the armature winding (3) of the generator (1) consist of a capacitor (151) connected via one of its ends to the common point of the resistor (105) and the diode (104) of the first shaping means (100), the other end of the capacitor (151) being connected to the negative pole by means of a resistor (152) and, on the other hand, to the cathode of a diode (153), the anode of which is connected to the negative pole.

5. Device according to claim 2, characterised in that the second shaping means (200), the output (205) of which supplies signals, of a length corresponding to the angular difference between the maximum value V1 and the zero value V0 of the signals coming from the armature winding (3) of the generator (1), to the transistor (250), consist of an operational amplifier (201) connected as a comparator, the positive input (202) of which is connected to the common point of resistors (203, 204), this amplifier being connected at its output (205), by means of a resistor (206), to the base of the transistor (250) and its inverting input (207) being connected, by means of a resistor (208), to the common point of the cathode of the diode (153), the resistor (152) and the capacitor (151).

6. Device according to Claim 2, characterised in that the integration means (300) controlled by the transistor (250) consist of an operational amplifier (301), the positive input (302) of which is connected to the common point of resistors (303, 304), this amplifier being collected at its output (305) to the positive input (352) of the comparison means (350), and the inverting input (306) of the amplifier (301) being connected, on the one hand, to the collector of the transistor (250) by means of a resistor (307) limiting the charging current of the capacitor (308) and, on the other hand, to the output (356) of the comparison means (350) by means of a network of resistors (309, 310) which, in association with the resistor (307), limits the discharging current of the capacitor (308), the operation of the integration means (300) and comparison means (350) being stabilised by a capacitor (311).

7. Device according to Claim 2, characterised in that the comparison means (350) consist of an operational amplifier (351), the positive input (352) of which is connected to the output (305) of the integration means (300), the inverting input (353) of the said amplifier (351) being connected to the common point of resistors (354, 355), and the output (356) of the amplifier (351) being connected to the end of a resistor (401), the other end of which is connected to the anode of a diode (402), the cathode of which constitutes the output (S) of the circuit (5).

1/3

_ FIG. 1 _

_FIG.2_

3 / 3

_FIG. 3_